# EUROPEAN PATENT SPECIFICATION

(11) **EP 4 265 622 B1**
(45) Date of publication and mention of the grant of the patent: **24.06.2026**
(21) Application number: 21905126.5
(22) Date of filing: 31.08.2021
(51) Int. Cl.: C07F 5/02, H01M 10/0525, H01M 10/0567, H01M 10/42, C07F 7/08, C07F 9/24, C07F 9/22, C07F 9/6571, C07F 7/18

(54) **ELECTROLYTE CONTAINING NITROGEN-BASED SALT STRUCTURE, PREPARATION METHOD THEREFOR AND USE THEREOF**
ELEKTROLYT MIT EINER SALZSTRUKTUR AUF STICKSTOFFBASIS, HERSTELLUNGSVERFAHREN DAFÜR UND VERWENDUNG DAVON
ÉLECTROLYTE CONTENANT UNE STRUCTURE DE SEL À BASE D'AZOTE, SON PROCÉDÉ DE PRÉPARATION ET SON UTILISATION

(30) Priority: 17.12.2020 CN 202011496061
(43) Date of publication of application: 25.10.2023
(73) Proprietor: Beijing WeLion New Energy Technology Co., Ltd, Beijing 102402 (CN)
(72) Inventor: YANG, Qi, Beijing 102402 (CN); CHENG, Yongbin, Beijing 102402 (CN); YU, Huigen, Beijing 102402 (CN)
(74) Representative: reuteler & cie SA
(86) International application number: PCT/CN2021/115580
(87) International publication number: WO 2022/127193

(56) References cited:
- CN-A- 102 195 082
- CN-A- 105 489 934
- CN-A- 106 946 925
- CN-A- 106 946 925
- CN-A- 107 210 490
- CN-A- 111 971 842
- US-A1- 2003 108 800
- US-A1- 2011 214 895
- PAWELKE G: "Potassium-bis(trifluoromethyl)amino trifluoroborate", JOURNAL OF FLUORINE CHEMISTRY, vol. 41, no. 2, 1 November 1988 (1988-11-01), NL, pages 289 - 291, XP055942711, ISSN: 0022-1139, DOI: 10.1016/S0022-1139(00)81551-1
- G.PAWELKE: "Potassium-Bis(Trifluoromethyl)Amino Trifluoroborate", JOURNAL OF FLUORINE CHEMISTRY, vol. 41, no. 2, 30 November 1988 (1988-11-30), pages 289 - 291, XP055942711, ISSN: 0022-1139, DOI: 10.1016/S0022-1139(00)81551-1

## Description

### FIELD

The present disclosure relates to the technical field of battery, in particular to an electrolyte containing a nitrogen-based salt structure, and a preparation method and the use thereof.

### BACKGROUND

The batteries have become a traditional way of storing energy for portable devices. The development of intelligent electronic technologies has imposed higher requirements on the energy density of batteries. In addition, due to the further impetus by the car manufacturers such as Tesla, the electric car has emerged as a novel field of battery use. Each use field of the batteries requires consideration of electrochemical performance, safety and cost of the batteries. In any case, it is imperative to use batteries with higher energy density and longer service life to meet the ever-increasing energy demand.

Taking the lithium battery as an example, in order to improve the energy density of the battery, it is necessary to use high-voltage, high-specific capacity anode material and low-voltage, high-capacity cathode material, such as high-voltage Lithium Cobaltate (LCO), high-nickel ternary (NCM811, NCM622, NCM532, and NCA), Lithium Nickel Manganate (LNMO) anode material, and cathode material such as metal lithium, graphite, silicon oxide carbon. In addition, it is desirable to match the electrolyte with a wide electrochemical window or form a stable passivation layer on the electrode surface, thereby improving the cycle stability of the battery.

The electrolyte is generally classified into a liquid-state electrolyte and a solid-state electrolyte, wherein the liquid-state electrolyte has significant advantages of high conductivity and desirable wettability inside the electrode. However, the organic solvent in the liquid-state electrolyte is flammable, prone to carry out uncontrollable side reactions, the electrode interface is unstable, and a large amount of gas can be generated, resulting in severe attenuation of capacity, low cycle service life and poor safety of the battery. The above problems can be significantly suppressed by using a non-flammable solid-state electrolyte. Furthermore, the solid-state electrolyte is proposed to suppress the growth of lithium dendrites. The solid-state electrolyte can be classified into two general categories, namely an organic polymer electrolyte and an inorganic (sulfide and oxide) electrolyte. The polymer has superior flexibility, desirable processability and convenient interface contact with electrodes, but it has low ionic conductivity, limited thermal stability and narrow electrochemical window at room temperature; the sulfide has high ionic conductivity and desirable processability, but most of the sulfide is unstable in air and will generate toxic H₂S gas upon contacting with water molecules, thereby requiring the extremely rigorous processing environment; the oxide has excellent chemical and thermal stability, high voltage resistance, high ionic conductivity, but it suffers from poor flexibility and large interfacial resistance. Therefore, the liquid-state electrolyte is still predominant in the battery industry, and in order to improve the cycle stability of the liquid battery, the electrolyte is added with various functional additives such as FEC (fluoroethylene carbonate), VC (vinylene carbonate), VEC (vinylidene ethylene carbonate) and DTD (ethylene sulfate, or 1,3,2-Dioxathiolane 2,2-dioxide). For example, the main components of the SEI passivation film formed on the negative electrode surface comprise various inorganic ingredients such as Li₂CO₃, LiF, Li₂O, LiOH and various organic ingredients such as ROCOOLi, ROLi, ROCOOLi, but the first cycle efficiency and specific discharge capacity are still slightly lower due to the consumption of the active ions from the positive electrode. If the added additive can form a passivation layer having ion conductivity and desirable stability on the surface of the electrode, and the ions from the electrodes are less consumed, the oxidation/reduction decomposition of the positive and negative electrode materials to the electrolyte can be effectively prevented. Therefore, the liquid-state electrolyte and the polymer electrolyte with a narrow electrochemical window can be applied in the high-voltage battery system, thereby significantly improving the energy density and cycle service life of the battery. Furthermore, the salt synthesis/purification process of the commercially available electrolyte at present is complicated, the electrolyte price is high, thus the cost of the entire battery is also high; if the salt synthesis/purification process of a new type of electrolyte is simple and the cost is slightly lower, making it partially or completely substitute for the salt as the electrolyte in the prior art, thereby balancing the superior performance and lower cost of the battery.

-[NBF₃]- is a strongly polar group capable of forming salts with cations, whereby -NBF₃M has a strong sense of presence in the molecular structure, the addition of which may alter the properties of the whole molecular structure. Only a few individual researchers in the prior art have conducted sporadic studies on the compounds containing -BF₃ groups, and its industrial use have not been discovered. US 2011/214895 A1 discloses lithium derivatives used in electrolytes for secondary batteries.

CN108878975A discloses an electrolyte additive comprising a pyridine-boron trifluoride complex and a halogenated silane, wherein the pyridine-boron trifluoride complex is at least one selected from the group consisting of compounds with a structure shown in formula (1): wherein R₁₁, R₁₂, R₁₃, R₁₄, R₁₅ are each independently selected from the hydrogen atom, halogen, cyano group, sulfonic acid group, sulfonyl group, substituted or unsubstituted C₁₋₂₀ alkyl group, substituted or unsubstituted C₂₋₂₀ alkenyl group, substituted or unsubstituted C₆₋₂₆ aryl group, substituted or unsubstituted C₁₋₂₀ alkoxy group, substituted or unsubstituted C₆₋₂₆ aryloxy group; substituent group is selected from halogen, sulfonic acid group or sulfonyl group. However, it pertains to the complex-based compounds, instead of the nitrogen-based salts, and currently, there are neither important research achievements, nor industrial use.

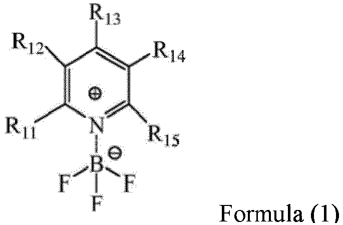

The applicant has surprisingly discovered that the -NBF₃M salt containing Li⁺/Na⁺ has desirable effects in the batteries, and therefore, a research group was specifically established to focus on the salt containing -NBF₃M and achieved the desired results.

The present disclosure has conducted an independent study on the substance having the -NBF₃M in the structure. The nitrogen-based salt has specific structure and properties, and has large influence on the properties of the entire structure, both the chemical and physical properties of the nitrogen-based salt are different from the other types of compound with rings or chains, as a result, the presence of -NBF₃M on the nitrogen-based salt can generate the effects different from those of other structure. The research subject of the present disclosure is determined to be -N-BF₃M directly or indirectly connected structure.

### SUMMARY

The present disclosure provides an electrolyte containing a nitrogen-based salt structure, a method and uses thereof, so as to solve the technical defects existing in the prior art.

The present disclosure provides an electrolyte containing a nitrogen-based salt structure comprising a boron trifluoride salt, wherein the structure of the boron trifluoride salt is as shown in formula I: 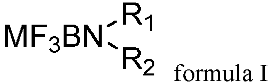 wherein M is a metal cation selected from Na⁺ , K⁺ , Li⁺ , Mg²⁺ or Ca²⁺ ;

R5 is selected from the group consisting of alkyl, alkenyl, alkynyl, enyne group, R₄, or a cyclic substituent includes a three-membered ring, a four-membered ring, a five-membered ring, a six-membered ring, a seven-membered ring, an eight-membered ring, and a polycyclic substituent containing two or more ring structures;wherein R3 and R4 are independently H, alkyl, alkenyl, heteroalkenyl or alkynyl; the salt substituents are selected from, sulfate, sulfonate, sulfonimide salt, carbonate, carboxylate, ether salt, ammonium salt, silicate, phosphate, hydrochloride salt, nitrate, azide.

R₁ or R₂ is 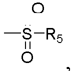 and the other from R1 or R2 is selected from a saturated carbon chain, an unsaturated carbon chain, a saturated heterochain or an unsaturated heterochain consisting of 1-20 atoms.

The present disclosure also provides a method for preparing the aforementioned electrolyte containing nitrogen-based salt structure, wherein the nitrogen-based salt is obtained by reacting -NH-containing raw material with a boron trifluoride compound and an M-source.

The present disclosure further provides a use of the aforementioned electrolyte containing a nitrogen-based salt structure in a secondary battery, and the use is: the boron trifluoride salt can be used as an additive of the electrolyte and as salt, and a polymerizable monomer can also be used as a single-ion conductor and a polymer skeleton after polymerization.

Further, the use comprises the use in a liquid-state electrolyte, a gel electrolyte, a mixed solid-liquid-state electrolyte, a quasi-solid-state electrolyte and an all-solid-state electrolyte; the liquid-state electrolyte, the gel electrolyte, the mixed solid-liquid-state electrolyte, the quasi-solid-state electrolyte and the all-solid-state electrolyte each independently comprises the aforementioned electrolyte containing a nitrogen-based salt structure.

Further, the use also comprises the use as a battery or a battery pack, the battery comprises the aforementioned electrolyte containing a nitrogen-based salt structure and an anode, a cathode and an encapsulation shell, the electrolyte can be applied in a liquid battery, a mixed solid-liquid battery, a semi-solid-state battery, a gel battery, a quasi-solid-state battery and an all-solid-state battery; the battery pack comprises the battery.

The main beneficial effects of the present disclosure are as follows:

The electrolyte in the present disclosure inventively compounds -NBF₃M into a structure, and the effects of the structure protected by the present disclosure are relatively pronounced.

1. The nitrogen-based boron trifluoride salt provided in the present disclosure can be used as an additive in the battery, it can form a stable and dense passivation film on the electrode surface of the battery. It can prevent direct contact of the electrolyte with the electrode active material, and inhibit decomposition of the components of the electrolyte, and widen the electrochemical window of the entire electrolyte system, and may significantly improve the discharge specific capacity, coulombic efficiency and cycle performance of the battery. In addition, the nitrogen-based boron trifluoride compound per se is an ion conductor and an additive. It consumes less active ions extracted from the anode while forming a passivation layer on the electrode surface, which can significantly improve the first coulombic efficiency and the first cycle discharge specific capacity of the battery. The electrochemical performance of the battery is improved when the electrolyte containing the nitrogen-based boron trifluoride compound and existing anode material with high voltage and high specific capacity, and existing cathode material with low voltage and high specific capacity are assembled into the battery. In addition, the structure of the present disclosure can be mixed with conventional additives, i.e., a dual additive or multi-additive, the battery using the dual additive or multi-additive shows superior electrochemical performance.

2. The boron-containing organic compound provided in the present disclosure can also be used as the main salt of the electrolyte, either use alone as the main salt or use together with other conventional salts to form double or multi-salts. Since the structure contains ions that are easily dissociated, it can provide higher ionic conductivity and higher stability and will not corrode the current collector, so that the assembled battery exhibits excellent electrochemical performance.

3. If the boron-containing organic compound provided by the present disclosure contains a polymerizable group, it can also be used as a single-ion conductor and a polymer skeleton after in-situ/non-in-situ polymerization. The ionic conductivity is higher and the effect is better when the boron-containing organic compound is used in combination with a conventional salt.

4. The boron trifluoride salt provided by the present disclosure has excellent prospects for industrial application due to its abundant raw material sources, wide range of raw material, low cost, simple preparation process and mild reaction conditions.

5. The present disclosure also uses metals (e.g., sodium, potassium) other than conventional lithium to form salts, which provides more possibilities for the later use of the present disclosure, cost control and raw material selection in the present disclosure, and has great significance.

Accordingly, the boron trifluoride material provided by the present disclosure has various uses in a battery, it can be applied to a liquid battery, a solid-liquid hybrid battery, a semi-solid-state battery, a gel battery, a quasi-solid-state battery, and an all-solid-state battery, and can improve the electrochemical performance of the battery, including but not limited to increase energy density of the battery, enhance cycle stability, and extend service life of the battery, besides those, the synthesis process is simple, the raw material price is low, and the economic benefit is considerable.

### BRIEF DESCRIPTION OF THE DRAWINGS

FIGS. 1-3 are the nuclear magnetic hydrogen spectrograms of the products shown in Examples 1-3 of the present disclosure; FIG. 4 is the nuclear magnetic hydrogen spectrogram of the product shown in Example 7 of the present disclosure; FIG. 5 is the nuclear magnetic hydrogen spectrogram of the product shown in Example 10 of the present disclosure; and FIG. 6 is the nuclear magnetic hydrogen spectrogram of the products shown in Example 13 of the present disclosure;
FIGS. 7-10 are graphs comparing the effects of the batteries 1/2/12/13 prepared with an electrolyte additive of Example 1/2/12/13 with the corresponding comparative batteries 1/2/12/13 without the electrolyte additive of Example 1/2/12/13 of the present disclosure, respectively;
FIGS. 11-12 are graphs comparing the effects of the batteries 2/5 prepared with the products of Example 2/5 as the liquid-state electrolyte salts with the corresponding comparative batteries 2/5 not containing the products of Examples 2/5 of the present disclosure, respectively;
FIG. 13 illustrates a graph comparing the effects of battery 1 prepared with the product of Example 1 as a salt in a solid-state electrolyte with the comparative battery 1 prepared with LiTFSI as a salt in a solid-state electrolyte;
FIG. 14 is a graph illustrating the effect of battery 8 prepared with a polymer electrolyte obtained after the polymerization of the monomer in Example 8.

### DESCRIPTION

The preferred embodiments of the present disclosure are described below with reference to appended figures.

Unless otherwise specified in the present disclosure, the scientific and technical terms used herein have the meaning generally understood by those skilled in the art. In addition, each of the reagents, materials and process steps used herein pertain to the reagents and materials widely used in the relevant fields and conventional steps. Moreover, for the sake of a better understanding of the present disclosure, the definitions and explanations of the relevant terms are provided as follows.

In the present disclosure, if a group needs to be attached with a two-part structure so that it has two connection bonds to be attached, any atom containing H can be attached if the present disclosure does not explicitly indicate which atoms are connected with the part to be attached.

In the structural formula of the present disclosure, if an atom is followed by a group in parenthesis "()", it is meant that the group in parenthesis is linked to the atom preceding it. For example, -C(CH₃)₂- refers to 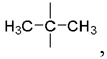 -CH(CH₃)- refers to

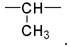

In the claims and specification of the present disclosure, the group M in -NBF₃M may be a monovalent, divalent, trivalent or polyvalent metal cation, and if it is not the monovalent cation, the number of -NBF₃ is increased accordingly such that it fits exactly with the valence number of M.

The "boron trifluoride-based compound" refers to boron trifluoride, a boron trifluoride-containing compound, or a boron trifluoride complex and the like.

In the claims and specification of the present disclosure, although the terms "structure provided by the present disclosure", "nitrogen-based boron trifluoride salt", "nitrogen-based boron trifluoride organic salt", "boron trifluoride salt", "nitrogen-based salt", "nitrogen-based boron trifluoride compound" and the like have different expressions, each refers to a structure provided by the present disclosure.

The inventive concept of the present disclosure is to provide one-membered organic boron trifluoride salt that can be used as electrolyte additive, electrolyte salt and polymerizable monomer, i.e., the organic substance containing -NBF₃M group, wherein M is Li⁺, Na⁺, etc. The boron trifluoride salt is used in a liquid-state battery, a mixed solid-liquid battery, a semi-solid-state battery, a gel battery, a quasi-solid-state battery and an all-solid-state battery. The preparation of the compounds is simple and smart and has a high yield. Namely, the compounds are obtained by reacting the raw materials, boron trifluoride-based compounds and the M-source, specifically the group -NH in the raw materials participates the reaction, and other structures do not participate the reaction. The specific methods mainly comprise two kinds:

1. The M-source and the raw materials were added into a solvent and blended under the nitrogen/argon atmosphere, the reaction was performed at 5°C to 60°C for 5-24 hours, and the mixed solution was subjected to drying under reduced pressure at 20°C-80°C under the vacuum degree condition of about -0.1 MPa to remove the solvent to obtain an intermediate; the boron trifluoride-based compound was then added, and the reaction was performed while stirring at 5°C to 60°C for 6-24 hours; the mixed solution was subjected to drying under reduced pressure at 20°C-80°C under the vacuum degree condition of about -0.1 MPa to obtain a crude product. The crude product was washed, filtered and dried to obtain the final product one-membered organic boron trifluoride salt with a yield of 70-95%.

2. The raw materials and boron trifluoride-based compound were added into a solvent and blended uniformly under the nitrogen/argon atmosphere, the reaction was performed at 5-60°C for 6-24 hours, the mixed solution was subjected to drying under reduced pressure at 20°C-80°C under the vacuum degree condition of about -0.1 MPa to remove the solvent to obtain an intermediate; the M-source was then added, and the solvent containing M-source was added into the intermediate, the reaction was performed while stirring at 5-60°C for 6-24 hours to obtain a crude product; the crude product was directly washed or washed after drying under reduced pressure, then filtered and dried to obtain the final product one-membered organic boron trifluoride salt with a yield of 70-95%.

In the two specific methods mentioned above, the boron trifluoride-based compound may include boron trifluoride diethyl ether complex, boron trifluoride tetrahydrofurane complex, boron trifluoride butyl ether complex, boron trifluoride acetic acid complex, boron trifluoride mono-ethylamine complex, boron trifluoride phosphoric acid complex, etc. The M-source includes metal lithium/sodium flake, lithium/sodium methanoxide, lithium/sodium hydroxide, lithium/sodium ethoxide, butyl lithium/sodium, lithium/sodium acetate, etc. Each of the solvents is independently alcohol (the raw material of some liquid alcohol may also act as the solvent), ethyl acetate, DMF (Dimethyl Formamide), acetone, hexane, dichloromethane, tetrahydrofuran, ethylene glycol dimethyl ether, etc. The washing may be performed with a weak polar solvent, such as diethyl ether, n-butyl ether, cyclohexane, diphenyl ether.

### Example 1

### Raw material

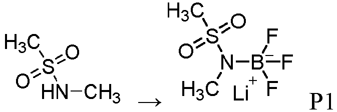

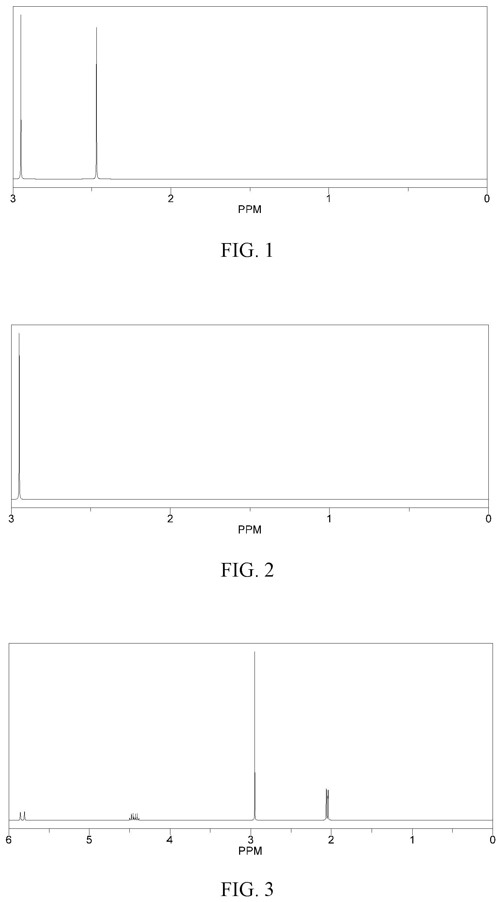

Method: 0.02mol of the raw material and boron trifluoride tetrahydrofuran complex (2.8g, 0.02mol) were mixed uniformly in 15mL of glycol dimethyl ether under nitrogen atmosphere, and reacted at room temperature for 12 hours. The resulting mixed solution was dried under reduced pressure at 45°C under the vacuum degree of about -0.1 MPa to remove the solvent, an intermediate was obtained. Lithium ethoxide (1.04g, 0.02mol) was dissolved in 10mL of ethanol and slowly added to the intermediate, subsequently stirred and reacted at 45°C for 8 hours, and the resulting mixed solution was dried under reduced pressure at 45°C under the vacuum degree of about -0.1MPa, the obtained solid was washed with n-butyl ether for three times, then filtered and dried to prepare the product P1. The yield of product P1 was 93%, and the nuclear magnetic hydrogen spectrogram was shown in FIG. 1.

### Example 2

### Raw material

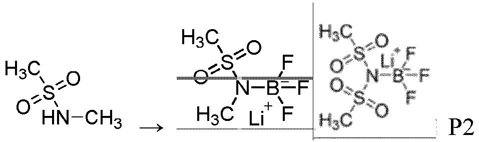

Method: 0.02mol of the raw material and boron trifluoride diethyl ether complex (2.98g, 0.02mol) were mixed uniformly in 15mL of THF (tetrahydrofuran) under argon atmosphere, and reacted at room temperature for 12 hours. The resulting mixed solution was dried under reduced pressure at 40°C under the vacuum degree of about -0.1 MPa to remove the solvent, and an intermediate was obtained. A hexane solution of 0.02mol of butyl lithium (c=1.6mol/L) was added to the intermediate, subsequently stirred and reacted at room temperature for 6 hours, the resulting mixed solution was dried under reduced pressure at 40°C under the vacuum degree of about -0.1 MPa, the obtained crude product was washed with cyclohexane for three times, filtered and dried to prepare the product P2. The yield of product P2 was 93%, and the nuclear magnetic hydrogen spectrogram was shown in FIG.2.

### Example 3

### Raw material

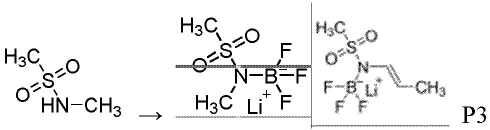

Method: 0.02mol of the raw material and lithium methoxide (0.76g, 0.02mol) were taken under nitrogen atmosphere, and mixed uniformly with 20ml of methanol and reacted at room temperature for 24 hours. The resulting mixed solution was dried under reduced pressure at 40°C under the vacuum degree of about -0.1 MPa to remove the solvent, an intermediate was obtained. Boron trifluoride tetrahydrofuran complex (3.07g, 0.02mol) and 15mL of THF (tetrahydrofuran) were added to the intermediate, stirred and reacted under room temperature for 16 hours, and the resulting mixed solution was dried under reduced pressure at 40°C under the vacuum degree of about -0.1 MPa, the obtained solid was washed with isopropyl ether for three times, then filtered and dried to prepare the product P3. The yield of product P3 was 88%, and the nuclear magnetic hydrogen spectrogram was shown in FIG. 3.

### Example 4

### Raw material

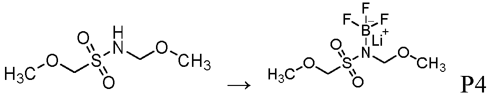

Method: 0.02mol of the raw material and boron trifluoride diethyl ether complex (2.98g, 0.02mol) were mixed uniformly in 15ml of glycol dimethyl ether in a glove box, and reacted at room temperature for 12 hours. The resulting mixed solution was dried under reduced pressure at 50°C under the vacuum degree of about -0.1 MPa to remove the solvent, an intermediate was obtained. Lithium ethoxide (1.04g, 0.02mol) was dissolved in 10mL of ethanol and added to the intermediate, subsequently stirred and reacted at room temperature for 18 hours, and the resulting mixed solution was dried under reduced pressure at 40°C under the vacuum degree of about -0.1MPa, the obtained solid was washed with isopropyl ether for three times, then filtered and dried to prepare the product P4. The yield of product P1 was 87%.

### Example 5

### Raw material

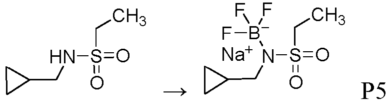

Method: 0.02mol of the raw material and boron trifluoride acetic acid complex (3.83g, 0.02mol) were mixed uniformly in 15ml of THF (tetrahydrofuran) under argon atmosphere, and reacted at room temperature for 12 hours. The resulting mixed solution was dried under reduced pressure at 40°C under the vacuum degree of about -0.1 MPa to remove the solvent, an intermediate was obtained. Sodium acetate (1.35g, 0.02mol) was dissolved in 10mL of N,N-dimethylformamide and added to the intermediate, subsequently stirred and reacted at 50°C for 8 hours, and the resulting mixed solution was dried under reduced pressure at 80°C under the vacuum degree of about -0.1MPa, the obtained solid was washed with diphenyl ether for three times, then filtered and dried to prepare the product P5. The yield of product P5 was 91%.

### Example 6

### Raw material

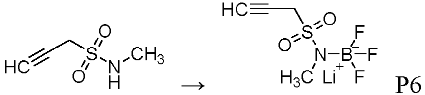

The electrolyte P6 provided by the example 6 was prepared by using 0.02mol of the raw material with the method of Example 1, the yield of electrolyte P6 was 87%.

### Example 7

### Raw material

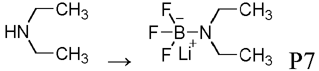

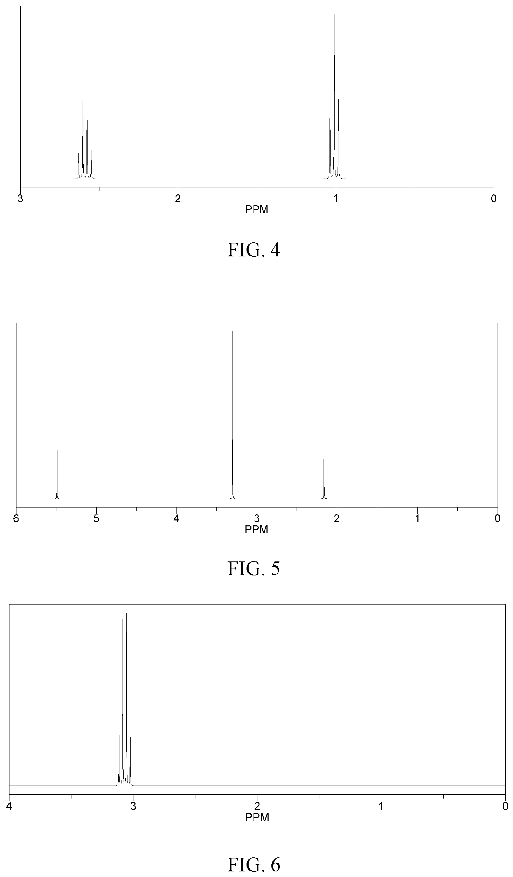

The electrolyte P7 provided by the example was prepared by using 0.02mol of the raw material with the method of Example 2, the yield of electrolyte P7 was 86%, and the nuclear magnetic hydrogen spectrogram was shown in FIG. 4.

### Example 8

### Raw material

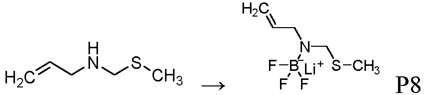

The electrolyte P8 provided by the example was prepared by using 0.02mol of the raw material with the method of Example 3, the yield of electrolyte P8 was 84%.

### Example 9

### Raw material

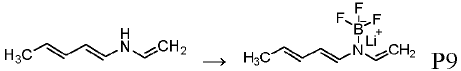

The electrolyte P9 provided by the example was prepared by using 0.02mol of the raw material with the method of Example 4, the yield of electrolyte P9 was 88%.

### Example 10

### Raw material

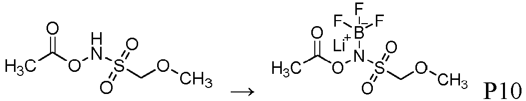

The electrolyte P10 provided by the example was prepared by using 0.02mol of the raw material with the method of Example 3, the yield of electrolyte P10 was 87%, and the nuclear magnetic hydrogen spectrogram was shown in FIG. 5.

### Example 11

### Raw material

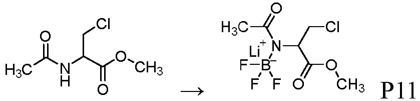

The electrolyte P11 provided by the example was prepared by using 0.02mol of the raw material with the method of Example 2, the yield of electrolyte P11 was 94%.

### Example 12

### Raw material

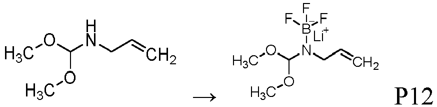

The electrolyte P12 provided by the example was prepared by using 0.02mol of the raw material with the method of Example 1, the yield of electrolyte P12 was 88%.

### Example 13

### Raw material

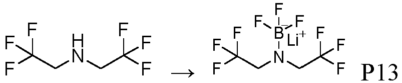

The electrolyte P13 provided by the example was prepared by using 0.02mol of the raw material with the method of Example 2, the yield of electrolyte P13 was 91%, and the nuclear magnetic hydrogen spectrogram was shown in FIG. 6.

### Example 14

### Raw material

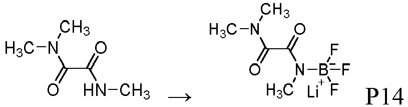

The electrolyte P14 provided by the example was prepared by using 0.02mol of the raw material with the method of Example 3, the yield of electrolyte P14 was 89%.

### Example 15

Nitrogen-based boron trifluoride organic salts claimed by the present disclosure were mainly used as additives and salts in the battery. Furthermore, the double bond-containing structure can initiate polymerization to form a single-ion conducting polymer electrolyte. When the nitrogen-based boron trifluoride salt of the present disclosure can be used in a small amount, its main function was to form a passivation layer on the electrode surface after decomposition and the salt has dissociable ions in itself, thus the ions supplied by the electrode were less consumed in the process of forming the passivation layer, thus the first cycle efficiency and cycle performance of the battery were significantly improved. When the salt used in increased amount, it is mainly used as an electrolyte salt, which transported ions after the dissociation; secondarily the salt can passivate electrode, and it was used as a salt alone or in combination with conventional salts to serve as double salts, both exhibiting desirable electrochemical performance. The nitrogen-based boron trifluoride salt provided by the present disclosure can be used in a liquid-state battery, a solid-liquid hybrid battery, a semi-solid-state battery, a gel battery, a quasi-solid-state battery, and an all-solid-state battery, which can help to improve the energy density, cycle stability and service life of the battery. The properties of the present disclosure were described in a testing manner as follows.

### I. As a liquid-state electrolyte additive

### (1) Preparation of positive electrode pole:

The active cathode material, the electronically conductive additive, and the binder were added to the solvent according to a mass ratio of 95:2:3, the solvent is 65% by mass of the total slurry, and the materials were mixed and stirred uniformly to obtain a positive electrode slurry with certain fluidity; the positive electrode slurry was coated on the aluminum foil, then baked, compacted and cut to obtain the usable positive electrode pole piece. The active materials were selected from the group consisting of lithium cobalt oxide (LiCoO₂, abbreviated as LCO), lithium nickel cobalt manganese oxide (eg. NCM811), lithium nickel cobalt aluminate (LiNi_{0.8}Co_{0.15}Al_{0.05}O₂, abbreviated as NCA), lithium nickel manganese oxide (LiNi_{0.5}Mn_{1.5}O₄, abbreviated as LNMO), Na_{0.9}[Cu_{0.22}Fe_{0.3}Mn_{0.48}]O₂ (abbreviated as NCFMO), each of the electronically conductive additives was selected from the group consisting of Carbon Nanotubes (CNT) and Super P, the binder was polyvinylidene fluoride (PVDF), and the solvent was N-methyl pyrrolidone (NMP).

### (2) Preparation of negative electrode pole

The active anode material (excluding metal Li), the electronically conductive additive, and the binder were added to the deionized water(solvent) according to the mass ratio of 95:2.5:2.5, the solvent is 42% of the total slurry, the materials were mixed and stirred uniformly to obtain a negative electrode slurry with a certain fluidity; the negative electrode slurry was coated on the copper foil, then baked and compacted to obtain the usable negative electrode pole. The active materials herein were selected from graphite (C), silicon carbon (SiOC450), metal lithium (Li), Soft Carbon (SC), the conductive agent was CNT and Super P, the binder was carboxymethyl cellulose (CMC) and styrene-butadiene rubber (SBR).

The positive and negative electrode systems selected in the present disclosure were shown in Table 1:

**Table 1 Positive and negative electrode system**

| The positive and negative electrode system of the battery | The primary material of a positive electrode | The primary material of a negative electrode |
|---|---|---|
| A1 | LCO | SiOC450 |
| A2 | NCM811 | SiOC450 |
| A3 | NCM811 | Li |
| A4 | NCA | C |
| A5 | LNMO | C |
| A6 | LCO | Li |
| A7 | NCFMO | SC |

### (3) Preparation of the liquid-state electrolyte

The series of electrolytes E1-E14 were obtained by uniformly mixing P1-P14, an organic solvent, conventional salts and conventional additives, wherein the solvent herein was Ethyl Methyl Carbonate (EMC), Dimethyl Carbonate (DMC), Diethyl Carbonate (DEC), Ethylene Carbonate (EC) and Propylene Carbonate (PC). Functional additives (i.e., conventional additives) were fluoroethylene carbonate (FEC), Vinylene Carbonate (VC), trimethyl phosphate (TMP), ethoxy pentafluorocyclo triphosphazene (PFPN), vinyl sulfate (DTD); conventional salts were lithium bis (oxalato) borate (LiBOB), lithium difluoro (oxalato) borate (LiODFB), lithium bis-(fluorosulfonylimide) (LiFSI), lithium hexafluorophosphate (LiPF₆), lithium bis-(trifluoromethyl) sulfonylimide (LiTFSI), sodium hexafluorophosphate (NaPF₆). The specific components, ratios and other parameters were shown in Table 2.

**Table 2 Electrolytes E1-E14 prepared by using the prepared P1-P14 provided by the present disclosure as an additive**

| Electrolytes | Solvents and percentages (volume ratio) | Salt and concentration | Conventional additives and percentages (mass ratio in the salt) | Use of the structure P in Examples as an additive and percentages (mass ratio in the salt) |
|---|---|---|---|---|
| E1 | 30%EC+70%EMC | 1M LiODFB | / | 2% P1 |
| E2 | 30%EC+70%EMC | 1M LiTFSI | / | 2% P2 |
| E3 | 30%EC+70%EMC | 1M LiPF₆ | 1%FEC | 1% P3 |
| E4 | 30%EC+70%EMC | 1M LiPF₆ | 0.5%VC+0.3%TMP+0.2% FEC | 1% P4 |
| E5 | 50o/oEC+50%DMC | 1M NaPF₆ | / | 1% P5 |
| E6 | 50%EC+50%DMC | 1M LiPF₆ | / | 1% P6 |
| E7 | 50%EC+50%DMC | 2M LiFSI | / | 1% P7 |
| E8 | 50%EC+50%DMC | 2M LiFSI | 0.5%TMP+0.1%VC | 1% P8 |
| E9 | 50%EC+50%DMC | 2M LiFSI | 0.5%DTD | 3% P9 |
| E10 | 50%EC+50%DEC | 1M LiODFB | 0.5%PFPN | 1% P10 |
| E11 | 50%EC+50%DEC | 1M LiODFB | 0.5%PFPN+0.3%DTD | 0.5% P11 |
| E12 | 50%EC+50%DEC | 1M LiODFB | / | 2% P12 |
| E13 | PC | 0.8M LiBOB | 0.5%DTD | 1%P13 |
| E14 | PC | 0.8M LiBOB | / | 1%P14 |

| | | | | |
|---|---|---|---|---|
| Note: 1M denoted 1 mol/L. Comparative samples: the P1-P14 were replaced by blanks according to the proportion of E1-E14 (i.e., P1-P14 were not added), so that the corresponding conventional liquid-state electrolyte comparison samples L1-L14 can be obtained. | | | | |

### (4) Assembly of the coin cell

The coin cell was assembled by using the liquid-state electrolyte series E1-E14 containing the structure in Examples of the present disclosure as the additive and by using the conventional liquid-state electrolyte L1-L14 in comparative samples, the specific assembling process was as follows: the coin cell was assembled by using a negative electrode shell, a negative electrode, a PE/Al₂O₃ separator, an electrolyte, a positive electrode, a stainless steel sheet, a spring piece and a positive electrode shell, then the long-cycle tests were carried out at room temperature, wherein the cycle modes comprised 1 cycle of 0.1C/0.1C, 5 cycles of 0.2C/0.2C and 44 cycles of 1C/1C (C represented the rate), the positive electrode was a disc with the diameter of 12mm, the negative electrode was a disc with the diameter of 14mm, and the separator was a disc with the diameter of 16.2mm, which was a commercially available Al₂O₃/PE porous separator.

The battery systems prepared with E1-E14 were batteries 1-14 respectively, and the battery systems prepared with L1-L14 were comparative batteries 1-14 respectively. The specific configuration and voltage range of the batteries were shown in Table 3.

The testing results of first cycle discharge specific capacity, first cycle efficiency, and the capacity retention rate after 50 cycles at room temperature of batteries 1-14 and comparative batteries 1-14 were shown in Table 4.

**Table 3 Configuration and test mode listing of batteries and comparative batteries in Examples**

| Batteries and comparative batteries | Positive and negative electrodes system of the battery | Voltage range | Cycle mode |
|---|---|---|---|
| Battery 1- 4 | A1 | 3-4.45V | 0.1C/0.1C 1 cycle |
| Comparative battery 1- 4 | | | +0.2C/0.2C 5 cycles |
| | | | +1C/1C 44 cycles |
| Battery 6 | A2 | 3-4.2V | 0.1C/0.1C 1 cycle |
| Comparative battery 6 | | | +0.2C/0.2C 5 cycles |
| | | | +1C/1C 44 cycles |
| Battery 7- 8 | A3 | 3-4.2V | 0.1C/0.1C 1cycle |
| Comparative battery 7-8 | | | +0.2C/0.2C 5 cycles |
| | | | +1C/1C 44 cycles |
| Battery 9 | A4 | 3-4.2V | 0.1C/0.1C 1 cycle |
| Comparative battery 9 | | | +0.2C/0.2C 5 cycles |
| | | | +1C/1C 44 cycles |
| Battery 10- 11 | A5 | 3-4.7V | 0.1C/0.1C 1 cycle |
| Comparative battery 10-11 | | | +0.2C/0.2C 5 cycles |
| | | | +1C/1C 44 cycles |
| Battery 12- 14 | A6 | 3-4.5V | 0.1C/0.1C 1 cycle |
| Comparative battery 12-14 | | | +0.2C/0.2C 5 cycles |
| | | | +1C/1C 44 cycles |
| Battery 5 | A7 | 1.5-4V | 0.1C/0.1C 1cycle |
| Comparative battery 5 | | | +0.2C/0.2C 5 cycles |
| | | | +1C/1C 44 cycles |

**Table 4 Comparison table of testing results of batteries in Examples and comparative batteries in Comparative Examples**

| Batteries in Examples and comparative batteries in Comparative Examples | First cycle discharge specific capacity (mAh/g) | First cycle efficiency (%) | Capacity retention rate after 50 cycles (%) |
|---|---|---|---|
| Battery 1 | 161.5 | 82.7 | 88.7 |
| Comparative battery 1 | 127.3 | 74.4 | 77.3 |
| Battery 2 | 161.0 | 82.9 | 88.6 |
| Comparative battery 2 | 127.4 | 74.5 | 77.4 |
| Battery 3 | 161.9 | 83.2 | 89.2 |
| Comparative battery 3 | 154.3 | 81.0 | 83.3 |
| Battery 4 | 161.7 | 83.1 | 89.0 |
| Comparative battery 4 | 154.4 | 81.3 | 83.6 |
| Battery 5 | 109.8 | 81.2 | 91.5 |
| Comparative battery 5 | 95.5 | 70.4 | 86.3 |
| Battery 6 | 171.5 | 83.7 | 89.8 |
| Comparative battery 6 | 141.2 | 75.5 | 77.0 |
| Battery 7 | 201.1 | 92.1 | 90.7 |
| Comparative battery 7 | 180.0 | 84.3 | 82.1 |
| Battery 8 | 202.1 | 92.6 | 91.3 |
| Comparative battery 8 | 197.3 | 90.2 | 87.2 |
| Battery 9 | 169.5 | 82.7 | 90.1 |
| Comparative battery 9 | 162.4 | 79.0 | 87.3 |
| Battery 10 | 139.7 | 89.3 | 90.5 |
| Comparative battery 10 | 135.2 | 87.1 | 87.0 |
| Battery 11 | 139.4 | 89.4 | 90.2 |
| Comparative battery 11 | 135.1 | 87.0 | 87.1 |
| Battery 12 | 190.8 | 91.3 | 90.4 |
| Comparative battery 12 | 172.3 | 85.4 | 82.3 |
| Battery 13 | 191.6 | 91.6 | 91.0 |
| Comparative battery 13 | 187.5 | 88.2 | 89.2 |
| Battery 14 | 190.9 | 91.3 | 90.7 |
| Comparative battery 14 | 172.3 | 85.4 | 82.2 |

As indicated by the testing results between the batteries of the Examples and batteries of the Comparative Examples, when the positive and negative electrode systems were the same in the coin cell, the first cycle efficiency, the first cycle discharge specific capacity and the capacity retention rate of the batteries using the structure P1-P14 of the present disclosure as the liquid-state electrolyte additives were much better than those of the batteries without adding the liquid-state electrolyte additives, and the properties were better than those of the conventional additives. In addition, in the presence of the conventional additives, the synergistic effect was shown from the use of the boron salt-containing additive, and the prepared batteries showed more excellent electrochemical performance.

### II. As salts in the liquid-state electrolytes

### (1) Preparation of the liquid-state electrolytes

The series of liquid-state electrolytes R1, R2, R5, R13 were obtained by uniformly mixing P1, P2, P5, P13 with an organic solvent, a conventional additive and a conventional salt; the series of conventional liquid-state electrolytes Q1, Q2, Q5, Q13 were obtained by uniformly mixing a conventional salt, an organic solvent and a conventional additive; each of the used solvents and the functional additives comprised the solvents and the functional additives described in the Part "I"' of the Examples. Specific components and ratios of the liquid-state electrolytes were shown in Table 5.

**Table 5 The liquid-state electrolytes prepared by using the synthesized substances P as the salts**

| Liquid-state electrolytes | Solvents and percentages (volume ratio) | Salts and concentrations | Conventional additives and percentages (mass ratio in salts) |
|---|---|---|---|
| R1 | 30%EC+70%EMC | 1M P1 | 1%FEC |
| Q1 | | 1M LiPF₆ | |
| R2 | 30%EC+70%EMC | 1M P2 | 0.5%FEC+0.2%DTD |
| Q2 | | 1M LiPF₆ | |
| R5 | 30%EC+70%EMC | 0.8M P5+0.2M NaPF₆ | 0.5%FEC+0.2%PFPN |
| Q5 | | 1M NaPF₆ | |
| R13 | 50%EC+50%DMC | 0.7M P 13+0.3M LiPF₆ | 1%FEC |
| Q13 | | 1M LiPF₆ | |

### (2) Batteries assembly

The coin cell was prepared by using the series of liquid-state electrolyte R (shown in Table 5) and conventional liquid-state electrolyte Q (shown in Table 5), the positive and negative electrodes, the size of separator, the assembly method, and the charge/discharge cycle mode of the battery were identical to the button battery shown in Part "I" of the Example, namely the batteries 1, 2, 5, 13 and the corresponding comparative batteries, respectively. The specific configuration, the cycle mode, and the voltage range of the batteries were shown in Table 6; the testing results of the first cycle discharge specific capacity, first cycle efficiency, and the capacity retention rate after 50 cycles of the batteries and the comparative batteries at room temperature were shown in Table 7.

**Table 6. Configurations and testing modes for batteries of Examples and batteries of Comparative Examples**

| Batteries in Examples and batteries in Comparative Examples | Electrolytes | Positive and negative electrodes system of the battery | Voltage range | Cycle mode |
|---|---|---|---|---|
| Battery 1 | R1 | A1 | 2.8-4.45V | |
| Comparative battery 1 | Q1 | | | |
| Battery 2 | R2 | A2 | 2.8-4.2V | |
| Comparative battery 2 | Q2 | | | 0.1C/0.1C 1 cycle |
| | | | | +0.2C/0.2C 5 cycles |
| Battery 5 | R5 | A7 | 1.5-4V | |
| Comparative battery 5 | Q5 | | | |
| Battery 13 | R13 | A3 | 2.8-4.2V | |
| Comparative battery 13 | Q13 | | | |

**Table 7 Comparison of testing results of the batteries in Examples and the batteries in Comparative Examples shown in Table 6**

| Batteries in Examples and batteries in Comparative Examples | First cycle discharge specific capacity (mAh/g) | First cycle efficiency (%) | Capacity retention rate after 50 cycles (%) |
|---|---|---|---|
| Battery 1 | 158.6 | 83.4 | 88.2 |
| Comparative battery 1 | 154.5 | 81.3 | 83.4 |
| Battery 2 | 169.2 | 83.6 | 88.5 |
| Comparative battery 2 | 164.3 | 82.2 | 86.1 |
| Battery 5 | 116.4 | 84.4 | 92.3 |
| Comparative battery 5 | 108.6 | 80.2 | 90.5 |
| Battery 13 | 199.7 | 92.5 | 90.2 |
| Comparative battery 13 | 197.2 | 90.1 | 87.3 |

In summary, the boron-containing salts provided by the present disclosure were used alone as salts or in combination with conventional salts to form double salts dissolved in non-aqueous solvents, the ions can be easily solvated, in order to provide the batteries with higher ionic conductivity and higher stability, and the battery showed very excellent electrochemical performance, high first cycle efficiency, high first cycle discharge specific capacity and high capacity retention rate in liquid-state battery systems, whose positive electrode selected from LCO, NCM811, NCFMO and negative electrode selected from SiOC450, Li, and SC, the properties were comparable to or better than those corresponding batteries prepared by the conventional salts.

### III. As salts in the solid-state electrolyte

### (1) Preparation of the polymer electrolyte membrane

The structures provided by the present disclosure, polymers and inorganic fillers were dissolved in Dimethyl Formamide (DMF) in an environment having a dew point less than -60°C, the materials were stirred and mixed by stirring, then coated to form a membrane, subsequently rolled and dried to obtain polymer electrolyte membranes G1, G4, G7, G10, and polymer comparative electrolyte membranes G'1-G'2. The specific components and ratios were as shown in Table 8. The polymer was selected from polyethylene oxide (PEO) with a molecular weight (MW) of 1,000,000, and the inorganic filler was selected from LLZO having a median particle size of 160nm, i.e., Li₇La₃Zr₂O₁₂ inorganic oxide solid-state electrolyte with a crystalline form of cubic phase and a median particle size of 160 nm.

**Table 8. Specific composition and ratios of the polymer electrolyte membranes**

| Polymer electrolyte membranes | Polymer | Salts | Inorganic fillers | The mass ratio | Solvents |
|---|---|---|---|---|---|
| G1 | PEO with an MW of 1,000,000 | P1 | 160nm LLZO | 4. 2: 1: 0.8 | DMF |
| G4 | PEO with an MW of 1,000,000 | P4 | / | 4. 2: 1 | DMF |
| G7 | PEO with an MW of 1,000,000 | P7 | 160nm LLZO | 4. 2: 1: 0.8 | DMF |
| G10 | PEO with an MW of 1,000,000 | P10 | / | 4. 2: 1 | DMF |
| G'1 | PEO with an MW of 1,000,000 | LiTFSI | 160nm LLZO | 4. 2: 1: 0.8 | DMF |
| G'2 | PEO with an MW of 1,000,000 | LiTFSI | / | 4. 2: 1 | DMF |

### (2) Preparation of positive electrode and negative electrode

The active positive electrode material, polymer + salt (in the same ratio as the polymer electrolyte membrane), the electronically conductive additive, and a binder were mixed, according to a mass ratio of 90:5:2.5:2.5 and stirred in a solvent in an environment with a dew point below -60°C, the mixture was coated on an aluminum foil, then dried and rolled to obtain an all-solid-state positive electrode. The active materials were selected from lithium cobalt oxide (LiCoO₂, abbreviated as LCO), lithium nickel cobalt manganese oxide (NCM 811), the electronically conductive additive was Super P, the binder was polyvinylidene fluoride (PVDF), and the solvent was NMP.

The metallic lithium sheet with a thickness of 50µm was rolled onto a copper foil as a cathode sheet.

### (3) Battery assembly and test

The polymer electrolyte membrane, positive electrode and negative electrode were cut and assembled into a 1Ah all-solid-state pouch battery, the battery was subjected to the long cycle testing consisting of 2 cycles of 0.1C/0.1C and 48 cycles of 0.3C/0.3C at the temperature of 50°C. The specific assembly system and testing method for the batteries were shown in Table 9, and the test results were shown in Table 10.

**Table 9. Configuration and testing method for the batteries and comparative batteries**

| Batteries in Examples and batteries in Comparative Examples | Polymer electrolyte membrane | Positive and negative electrodes system | Voltage range | Cycle mode |
|---|---|---|---|---|
| Battery 1 | G1 | A3 | | |
| Battery 4 | G4 | A3 | | |
| Battery 7 | G7 | A6 | 3-4.2V | 0.1C/0.1C 2 cycles, +0.3/0.3C 48 cycles |
| Battery 10 | G10 | A6 | | |
| Comparative battery 1 | G'1 | A3 | | |
| Comparative battery 2 | G'2 | A6 | | |

**Table 10 Comparison of test results of batteries and comparative batteries in Table 9**

| Batteries in Examples and batteries in Comparative Examples | First cycle discharge capacity (Ah) | First cycle efficiency (%) | Capacity retention rate after 50 cycles (%) |
|---|---|---|---|
| Battery 1 | 0.90 | 90.4 | 85.8 |
| Battery 4 | 0.89 | 89.2 | 85.3 |
| Battery 7 | 0.85 | 85.6 | 87.5 |
| Battery 10 | 0.86 | 86.4 | 87.7 |
| Comparative battery 1 | 0.88 | 88.3 | 67.6 |
| Comparative battery 2 | 0.85 | 85.5 | 68.7 |

As shown by the data in Table 9 and Table 10, the batteries prepared with P1, P4, P7 and P10 had excellent long-cycle stability and better property than the cycle performance of the corresponding batteries prepared with LiTFSI, the possible reasons may be that the nitrogen-based boron trifluoride salt of the present disclosure not only had excellent ion transport performance, but also formed a more dense and stable passivation layer on the anode surface, thereby preventing catalytic decomposition of the electrolyte components by the positive electrode active material. Furthermore, the boron trifluoride salt of the present disclosure did not corrode the current collector and thus exhibits superior electrochemical performance to the conventional salts.

### IV. As the single-ion conductor polymer electrolyte

### (1) Preparation of the electrolyte

The monomers P3, P8, P9, P12, a plasticizer, battery additives, a salt and an initiator were mixed uniformly to form a precursor solution, and the precursors S3, S8, S9, S12 were obtained, the specific ratios of ingredients were as shown in Table 11. The initiator in use was Azob is isobutyronitrile (AIBN).

**Table 11 Composition of the precursor solution**

| Precursors | Monomers | Plasticizers | Battery additives | Salts | Initiators | Mass ratios | Temperature×t ime |
|---|---|---|---|---|---|---|---|
| S3 | P3 | EC/EMC | FEC | LiPF₆ | AIBN | 60: 28.5: 1: 10: 0.5 | 60°C×12h |
| S8 | P8 | EC/EMC | FEC | LiPF₆ | AIBN | 60: 28.5: 1: 10: 0.5 | 60°C×12h |
| S9 | P9 | EC/EMC | FEC | / | AIBN | 70: 28.5: 1: 0.5 | 60°C×12h |
| S12 | P12 | EC/EMC | FEC | LiOD FB | AIBN | 60: 28.5: 1: 10: 0.5 | 60°C×12h |

### (2) Assembly of batteries

The electrolyte precursor solutions S3, S8, S9, S12 obtained from Table 11 which were used for assembling the pouch batteries of A2 system respectively, namely the batteries (i.e., Examples) 3, 8, 9, 12, the specific assembly process was as follows: the NCM811 positive electrode having a dimension of 64mm×45mm, the SiOC450 negative electrode having a dimension of 65mm×46mm, and the separator were assembled into the 2Ah pouch battery cell, which was subjected to lamination, baking, electrolyte injection, and formation process to obtain a secondary battery, the battery assembly system was A2, and the separator was a commercially available PE/Al₂O₃ porous membrane.

### (3) Battery test

After the secondary batteries prepared from Examples 3, 8, 9, and 12 were completely cured, a first cycle discharge capacity, a first cycle efficiency, and a capacity retention rate after 50 cycles of the batteries was tested at room temperature, the test voltage was within a range of 3.0-4.2V, wherein the cycle mode was composed of 2 cycles of 0.1C/0.1C and 48 cycles of 0.3C/0.3C (C represented the multiplying power), and the test results were as shown in Table 12.

**Table 12 Test results of batteries of Examples**

| Batteries in Examples | First cycle discharge capacity (Ah) | First cycle efficiency (%) | Capacity retention rate after 50 cycles (%) |
|---|---|---|---|
| Battery 3 | 1.96 | 97.6 | 91.2 |
| Battery 8 | 1.93 | 96.9 | 91.0 |
| Battery 9 | 1.82 | 90.8 | 80.5 |
| Battery 12 | 1.94 | 96.5 | 91.3 |

As shown in Table 12, it is discovered from test data of batteries in the Examples that the precursors S3, S8, S9, and S12 composed of polymerizable monomers P3, P8, P9, P12 are used as single-ion conductor polymer electrolytes after in-situ curing, when the precursors are used in the battery systems consisting of NCM811 as the positive electrode and SiOC450 as the negative electrode. The batteries exhibit very excellent cycle performance, high first cycle efficiency, high first cycle discharge specific capacity, and high capacity retention rate. Furthermore, the additional salt is not added to the battery made from Example 9 (refer to Table 11), but the battery can cycle normally (see Table 12), indicating that the boron trifluoride salt of the present disclosure per se has a salt structure, and in the case of without adding the salt, a solid-state electrolyte with excellent performance can also be obtained after polymerization of the monomers. In addition, when the electrolyte is used in further matching with a conventional salt, the batteries exhibit more excellent electrochemical performance due to the increased number of dissociated ions.

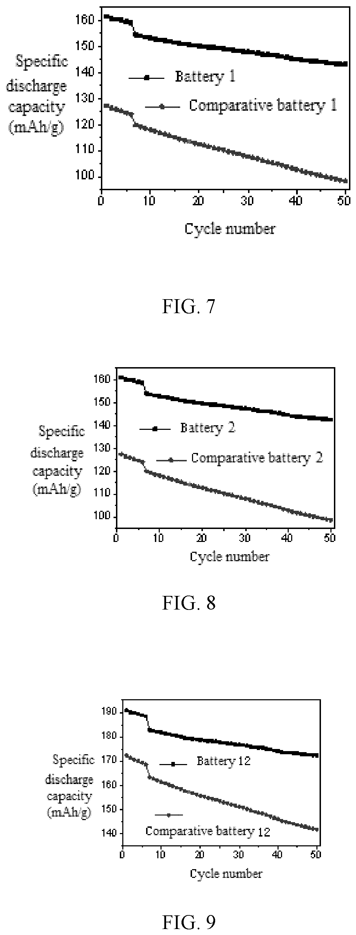

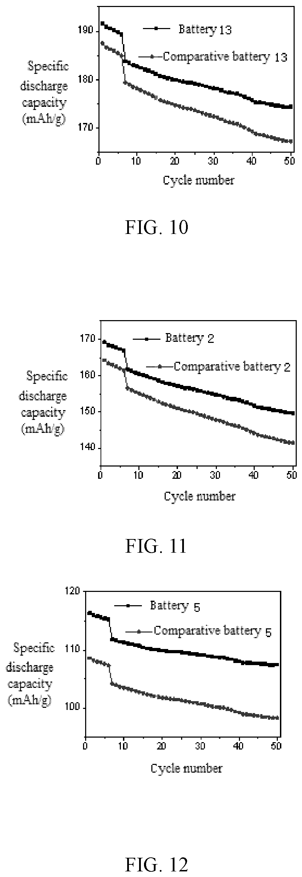

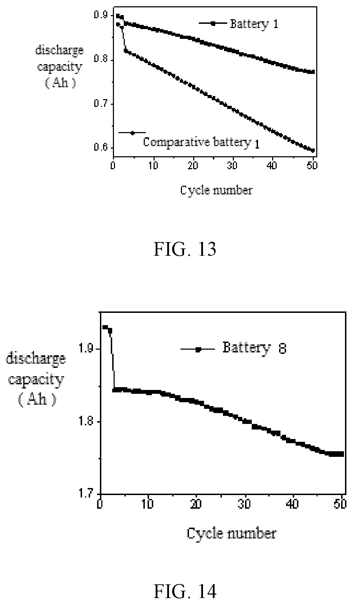

In addition, the appended figures selected and displayed some graphs showing the test effects of batteries prepared by using the nitrogen-based boron trifluoride salt as an additive, salts and polymer electrolytes obtained after polymerization of monomers. FIGS. 7-10 are graphs comparing the effects of the batteries 1/2/12/13 prepared with an electrolyte additive of Example 1/2/12/13 with the corresponding comparative batteries 1/2/12/13 not containing an electrolyte additive of Example 1/2/12/13 of the present disclosure, respectively; FIGS. 11-12 are graphs comparing the effects of the batteries 2/5 prepared with the products of Example 2/5 as the liquid-state electrolyte salts with the corresponding comparative batteries 2/5 not containing the products of Examples 2/5 of the present disclosure, respectively; FIG. 13 illustrates a graph comparing the effects of the battery 1 prepared with the product of Example 1 as a salt in a solid-state electrolyte with the comparative battery 1 prepared with LiTFSI as a salt in a solid-state electrolyte; FIG. 14 is a graph illustrating the effect of battery 8 prepared with a polymer electrolyte obtained after polymerization of the monomer in Example 8. It is also shown in FIGS. 7-14 that the structures of the present disclosure have excellent effects.

The first cycle efficiency, the first cycle discharge specific capacity, the first discharge capacity, capacity retention rate and other properties have a direct and significant influence on the overall performance of the batteries, and directly determine whether the batteries are usable. As a result, improving those properties is an objective or direction for many researchers in the field, however, the improvements of the properties are not easily achieved, the improvement of around 3-5% is generally regarded as significant progress. The present inventors have surprisingly found in preliminary experimental data that the improvements in these properties are very large compared to the conventional data, especially use as an electrolyte additive, the properties are improved by about 5-30%; in addition, the combined use of an additive of the present disclosure with conventional additives also shows desirable effects. The examples only show the use of additives as a liquid-state electrolyte, the structures provided by the present disclosure can also be used as a solid-state electrolyte additive, the content is not further displayed due to space limitations. More surprisingly, the composition can also be used as a salt in an electrolyte and the effects are excellent, the experiments show that the effects of said composition are superior to those of the existing mature components used in the practice. Moreover, the polymerizable monomers provided by the present disclosure can also be used as a single-ion conductor and a polymer skeleton after polymerization, and the effects are excellent and the application prospects are wonderful. More importantly, the types of structures of the present disclosure have significant differences from the conventional structures, the novel structures provide a new direction and idea for research and development in the art, and explore a broad space for further development; in addition, a single structure of the present disclosure has many uses, and has great significance.

In summary, the nitrogen-based boron trifluoride salt provided by the present disclosure can be used in a small amount, its main function is to form a passivation layer on the electrode surface after decomposition and the salt has dissociable ions in itself, thus the ions supplied by the electrode are less consumed in the process of forming the passivation layer, thus the first cycle efficiency and cycle performance of the battery are significantly improved; It is also possible to increase the amount so as to used mainly as an electrolyte salt, the primary function is to transport ions after the dissociation, the secondary function is to passivate the electrode, it is use as a salt alone or in combination with conventional salts to serve as double salts, both exhibit desirable electrochemical performance. In addition, the polymerizable monomers can also be used as a single-ion conductor and a polymer skeleton after polymerization. The nitrogen-based boron trifluoride salt provided by the present disclosure can be used in a liquid-state battery, a solid-liquid hybrid battery, a semi-solid-state battery, a gel battery, a quasi-solid-state battery and an all-solid-state battery, which can help to improve the energy density, cycle stability and service life of the battery. Moreover, the low-priced raw material and a simple synthesis and purification process make it economically efficient.

In the present disclosure, only some of the structures are selected in Examples as representatives to illustrate the preparation method and effects of the present disclosure, and other structures not listed have similar effects. For example: 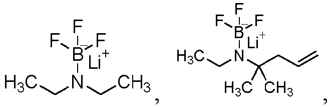 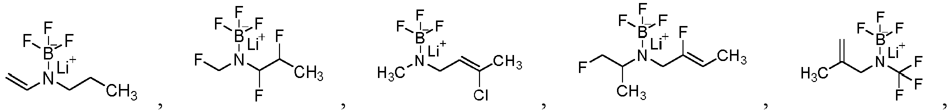 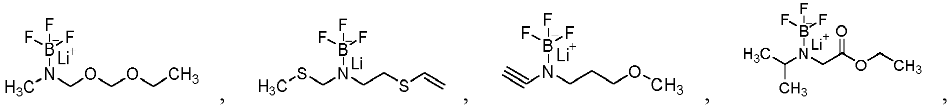 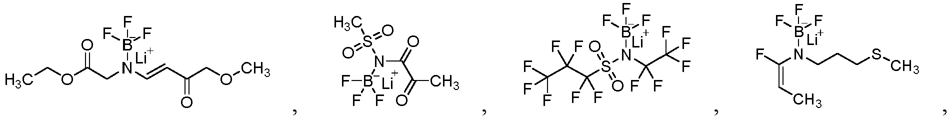 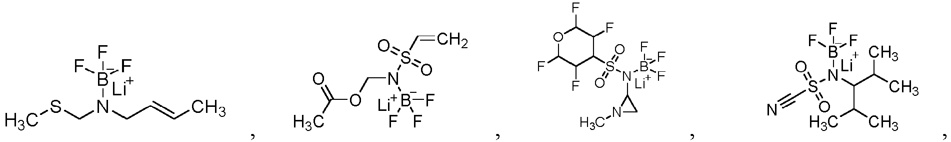 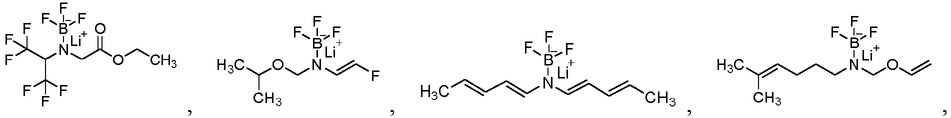 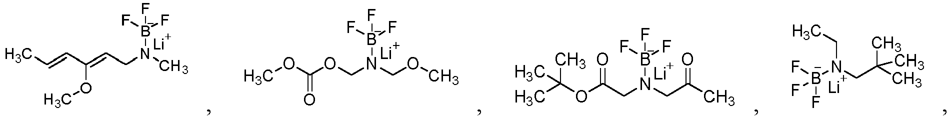 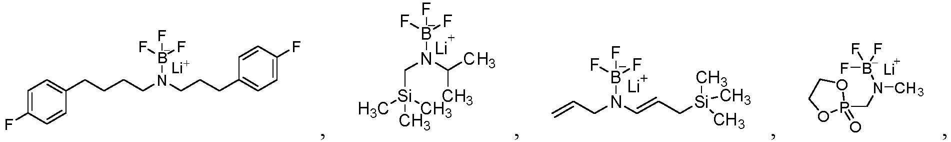 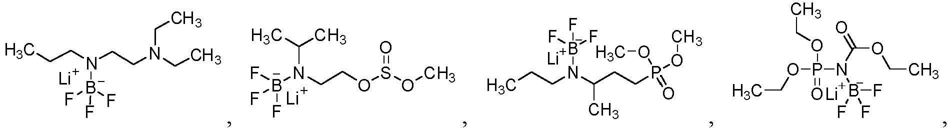 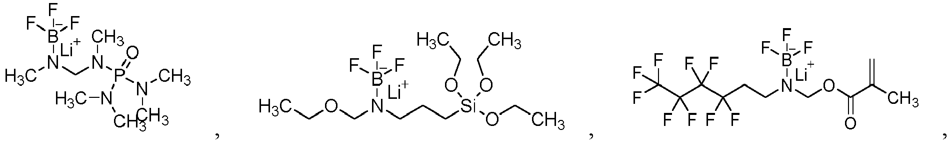 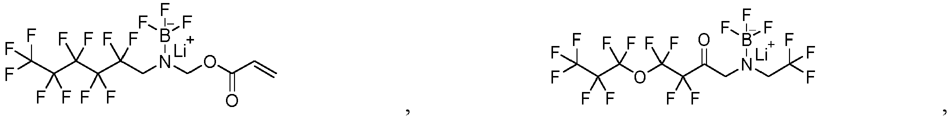 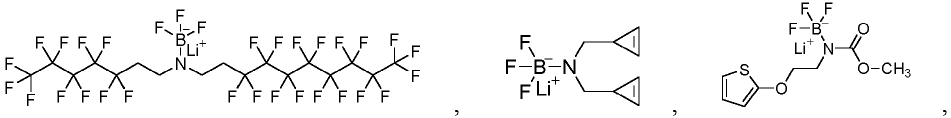 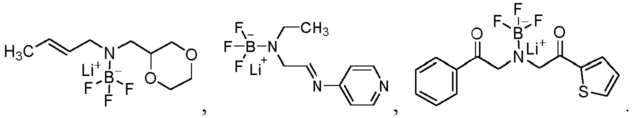 Each of the structures listed above has excellent effects, and the other structures similar to those described in any one paragraph of the present disclosure also generates desirable effects, but due to the space limitations, examples 1-14 will be provided for demonstrating the effects of the structures protected by the present disclosure. Moreover, the preparation methods of Examples 1-14 and the structures listed above is that reacting the raw material, the M-source and boron trifluoride compound to form the product boron trifluoride organic salt, that is, the group -NH in the raw material may be converted into -NBF₃M, M may be Li⁺, Na⁺, and other structures are unchanged, as for details, please refer to Examples 1-5. As for the structures which are not listed in Examples, the preparation methods thereof are the same.

The raw materials used in the Examples are commercially available or can be prepared with a simple process. The preparation process also belongs to the prior art, the content is not described in detail in the specification.

It should be further noted that the applicant has performed a very large number of experiments on the series of structures, in order to better compare with the existing systems, a plurality of experiments are performed for the same structures and systems, thus there may be some errors between the different batch experiments.

Finally, it should be understood that the aforementioned embodiments merely serve to illustrate the present disclosure, instead of imposing limitations thereto; although the present disclosure has been described in detail with reference to the above-described embodiments, the ordinary skilled person in the art shall comprehend that the applicant can make amendments on the technical solution described in the examples, or perform the equivalent replacement in regard to a portion or all of the technical features described in the technical solution, the amendment or replacement does not cause the essence of the corresponding technical solution to depart from the protection scopes of the examples of the present disclosure.

## Claims

1. An electrolyte containing a nitrogen-based salt structure comprising a boron trifluoride salt, wherein the structure of the boron trifluoride salt is as shown in formula I: 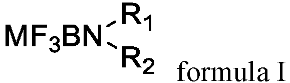
wherein M is a metal cation selected from Na⁺, K⁺, Li⁺, Mg²⁺ or Ca²⁺; R₁ or R₂ is 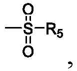 and R₅ is selected from an alkyl, alkenyl, alkynyl, enyne group, 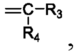 or a cyclic substituent which
includes a three-membered ring, a
four-membered ring, a five-membered ring, a six-membered ring, a seven-membered ring, an eight-membered ring, and a polycyclic substituent containing two or more ring structures;
wherein R₃ and R₄ are independently H, alkyl, alkenyl, heteroalkenyl or alkynyl; the salt substituents are selected from, sulfate, sulfonate, sulfonimide salt, carbonate, carboxylate, ether salt, ammonium salt, silicate, phosphate, hydrochloride salt, nitrate, azide and the other from R1 or R2 is selected from a saturated carbon chain, an unsaturated carbon chain, a saturated heterochain or an unsaturated heterochain consisting of 1-20 atoms.

2. The electrolyte according to claim 1, wherein R₁ or R₂ is selected from a saturated carbon chain, an unsaturated carbon chain, a saturated heterochain or an unsaturated heterochain consisting of 1-10 atoms.

3. The electrolyte according to any one of claims 1-2, wherein M is selected from Na⁺, K⁺, or Li⁺.

4. The electrolyte according to claim 1, wherein said electrolyte is selected from the following group:

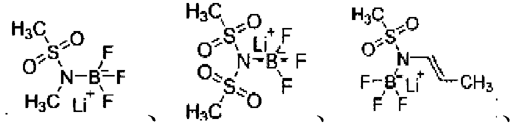

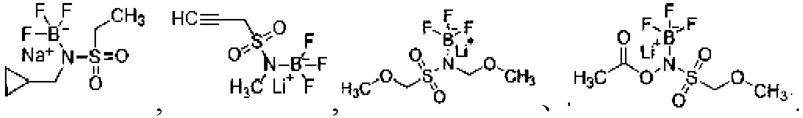

5. A method of preparing an electrolyte containing a nitrogen-based salt structure according to any one of claims 1-4, wherein the nitrogen-based salt is obtained by reacting a -NH-containing raw material with a boron trifluoride compound and an M-source.

6. A use of an electrolyte containing a nitrogen-based salt structure according to any one of claims 1-4 in a secondary battery, wherein the use is: the boron trifluoride salt can be used as an additive of the electrolyte, as a salt, and as a polymerizable monomer can also be used as a single-ion conductor and a polymer skeleton after polymerization.

7. The use according to claim 6, wherein the use comprises the use in a liquid-state electrolyte, a gel electrolyte, a mixed solid-liquid-state electrolyte, a quasi-solid-state electrolyte and an all-solid-state electrolyte; the liquid-state electrolyte, the gel electrolyte, the mixed solid-liquid-state electrolyte, the quasi-solid-state electrolyte and the all-solid-state electrolyte each independently comprises an electrolyte containing a nitrogen-based salt structure according to any one of claims 1-4.

8. The use according to claim 6 or 7, wherein the use also comprises the use as a battery or a battery pack, the battery comprises an electrolyte containing a nitrogen-based salt structure according to any one of claims 1-6 and an anode, a cathode and an encapsulation shell, the electrolyte can be applied in a liquid-state battery, a mixed solid-liquid battery, a semi-solid-state battery, a gel battery, a quasi-solid-state battery and an all-solid-state battery; the battery pack comprises the battery.

## Patentansprüche

1. Elektrolyt, enthaltend eine Salzstruktur auf Stickstoffbasis, umfassend ein Bortrifluoridsalz, wobei die Struktur des Bortrifluoridsalz wie in Formel I gezeigt ist: 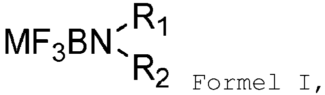
wobei M ein Metallkation ist, das aus Na⁺, K⁺, Li⁺, Mg²⁺ oder Ca²⁺ ausgewählt ist; R₁ oder R₂ 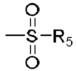 ist und R₅ aus einer Alkyl-, Alkenyl-, Alkinyl-, Eningruppe, 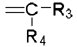 oder einem cyclischen Substituenten, der einen dreigliedrigen Ring, einen viergliedrigen Ring, einen fünfgliedrigen Ring, einen sechsgliedrigen Ring, einen siebengliedrigen Ring, einen achtgliedrigen Ring einschließt, und einem polycyclischen Substituenten, enthalten zwei oder mehr Ringstrukturen, ausgewählt ist;
wobei R₃ und R₄ unabhängig H, Alkyl, Alkenyl, Heteroalkenyl oder Alkinyl sind; die Salzsubstituenten aus Sulfat, Sulfonat, Sulfonimidsalz, Carbonat, Carboxylat, Ethersalz, Ammoniumsalz, Silikat, Phosphat, Hydrochloridsalz, Nitrat, Azid und sind und das andere von R1 oder R2 aus einer gesättigten Kohlenstoffkette, einer ungesättigten Kohlenstoffkette, einer gesättigten Heterokette oder einer ungesättigten Heterokette, bestehend aus 1-20 Atomen, ausgewählt ist.

2. Elektrolyt nach Anspruch 1, wobei R₁ oder R₂ aus einer gesättigten Kohlenstoffkette, einer ungesättigten Kohlenstoffkette, einer gesättigten Heterokette oder einer ungesättigten Heterokette, bestehend aus 1-10 Atomen, ausgewählt ist.

3. Elektrolyt nach einem der Ansprüche 1 bis 2, wobei M aus Na⁺, K⁺ oder Li⁺ ausgewählt ist.

4. Elektrolyt nach Anspruch 1, wobei der Elektrolyt aus der folgenden Gruppe ausgewählt ist:

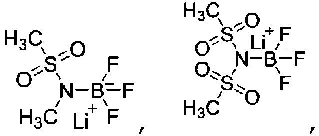

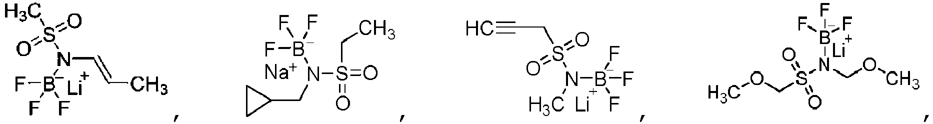

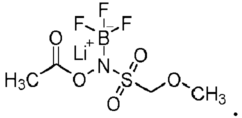

5. Verfahren zur Herstellung eines Elektrolyts, enthaltend eine Salzstruktur auf Stickstoffbasis, nach einem der Ansprüche 1 bis 4, wobei das Salz auf Stickstoffbasis durch Umsetzen eines -NH-enthaltenden Rohstoffs mit einer Bortrifluoridverbindung und einer M-Quelle erhalten wird.

6. Verwendung eines Elektrolyts, enthaltend eine Salzstruktur auf Stickstoffbasis, nach einem der Ansprüche 1 bis 4 in einer Sekundärbatterie, wobei die Verwendung ist: das Bortrifluoridsalz kann als ein Additiv des Elektrolyts, als ein Salz verwendet werden und kann als ein polymerisierbares Monomer außerdem als ein Einzelionenleiter und ein Polymergerüst nach einer Polymerisation verwendet werden.

7. Verwendung nach Anspruch 6, wobei die Verwendung die Verwendung in einem flüssigen Elektrolyt, einem Gel-Elektrolyt, einem festen/flüssigen Mischelektrolyt, einem quasi-festen Elektrolyt und einem vollständig festen Elektrolyt umfasst; wobei der flüssige Elektrolyt, der Gel-Elektrolyt, der feste/flüssige Mischelektrolyt, der quasi-feste Elektrolyt und der vollständig feste Elektrolyt jeweils unabhängig einen Elektrolyt, enthaltend eine Salzstruktur auf Stickstoffbasis, nach einem der Ansprüche 1 bis 4 umfasst.

8. Verwendung nach Anspruch 6 oder 7, wobei die Verwendung außerdem die Verwendung als eine Batterie oder ein Batteriepack umfasst, wobei die Batterie einen Elektrolyt, enthaltend eine Salzstruktur auf Stickstoffbasis, nach einem der Ansprüche 1 bis 6 und eine Anode, eine Kathode und eine Einkapselungsschale umfasst, wobei der Elektrolyt in einer flüssigen Batterie, einer festen/flüssigen Mischbatterie, einer halbfesten Batterie, einer Gel-Batterie, einer quasi-festen Batterie und einer vollständig festen Batterie angewendet werden kann; wobei der Batteriepack die Batterie umfasst.

## Revendications

1. Electrolyte contenant une structure de sel à base d'azote comprenant un sel trifluorure de bore, dans lequel la structure du sel trifluorure de bore est telle que représentée par la formule I : 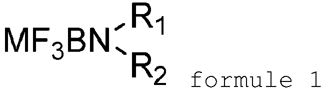
dans lequel M est un cation métallique choisi parmi Na⁺, K⁺, Li⁺, Mg²⁺ ou Ca²⁺ ; R₁ ou R₂ est 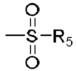 et R₅ est choisi parmi les groupes alkyle, alcényle, alcynyle, ényne, 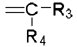 ou un substituant cyclique qui englobe un cycle à trois chaînons, un cycle à quatre chaînons, un cycle à cinq chaînons, un cycle à six chaînons, un cycle à sept chaînons, un cycle à huit chaînons, et un substituant polycyclique contenant deux ou plus de deux structures cycliques ;
dans lequel R₃ et R₄ sont indépendamment H, alkyle, alcényle, hétéroalcényle ou alcynyle ; les substituants sels sont choisis parmi sulfate, sulfonate, sel de sulfonimide, carbonate, carboxylate, sel d'éther, sel d'ammonium, silicate, phosphate, sel chlorhydrate, nitrate, azoture, et l'autre parmi R₁ ou R₂ est choisi parmi une chaîne carbonée saturée, une chaîne carbonée insaturée, une hétérochaîne saturée ou une hétérochaîne insaturée constituée de 1 à 20 atomes.

2. Electrolyte selon la revendication 1, dans lequel R₁ ou R₂ est choisi parmi une chaîne carbonée saturée, une chaîne carbonée insaturée, une hétérochaîne saturée ou une hétérochaîne insaturée constituée de 1 à 10 atomes.

3. Electrolyte selon l'une quelconque des revendications 1 à 2, dans lequel M est choisi parmi Na⁺, K⁺ ou Li⁺.

4. Electrolyte selon la revendication 1, dans lequel l'électrolyte est choisi dans le groupe suivant :

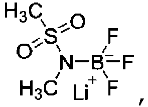

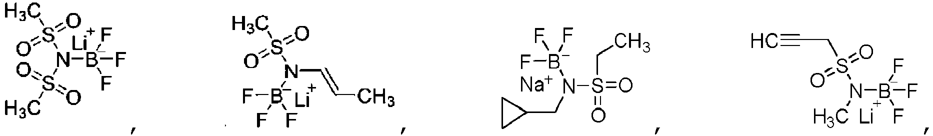

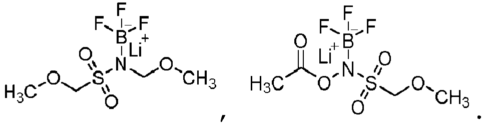

5. Procédé de préparation d'un électrolyte contenant une structure de sel à base d'azote selon l'une quelconque des revendications 1 à 4, dans lequel le sel à base d'azote est obtenu par réaction d'une matière première contenant -NH avec un composé trifluorure de bore et une source de M.

6. Utilisation d'un électrolyte contenant une structure de sel à base d'azote selon l'une quelconque des revendications 1 à 4 dans une batterie rechargeable, dans laquelle l'utilisation est la suivante : le sel trifluorure de bore peut être utilisé en tant qu'additif de l'électrolyte, en tant que sel, et en tant que monomère polymérisable, et peut aussi être utilisé en tant que conducteur mono-ionique et en tant que charpente polymère après polymérisation.

7. Utilisation selon la revendication 6, dans laquelle l'utilisation comprend une utilisation dans un électrolyte liquide, un électrolyte gel, un électrolyte solide-liquide mixte, un électrolyte quasi solide et un électrolyte tout solide ; chacun parmi l'électrolyte liquide, l'électrolyte gel, l'électrolyte liquide-solide mixte, l'électrolyte quasi solide et l'électrolyte tout solide comprend indépendamment un électrolyte contenant une structure de sel à base d'azote selon l'une quelconque des revendications 1 à 4.

8. Utilisation selon la revendication 6 ou 7, dans laquelle l'utilisation comprend aussi une utilisation en tant que batterie ou bloc-batterie, dans laquelle la batterie comprend un électrolyte contenant une structure de sel à base d'azote selon l'une quelconque des revendications 1 à 6 et une anode, une cathode et une coque d'encapsulation, l'électrolyte peut être appliqué dans une batterie liquide, une batterie solide-liquide mixte, une batterie semi-solide, une batterie gel, une batterie quasi solide et une batterie tout solide ; le bloc-batterie comprend la batterie.
